# EUROPÄISCHE PATENTSCHRIFT

(11) **EP 2 102 537 B1**
(45) Veröffentlichungstag und Bekanntmachung des Hinweises auf die Patenterteilung: **21.04.2010**
(21) Anmeldenummer: 07847866.6
(22) Anmeldetag: 05.12.2007
(51) Int. Cl.: F16K 17/06

(54) **STEUEREINHEIT ZUR BETÄTIGUNG EINES DRUCKVENTILS, INSBESONDERE EINES DIFFERENZDRUCKVENTILS EINER FLUGZEUGKABINE**
CONTROL UNIT FOR ACTUATING A PRESSURE VALVE, PARTICULARLY A DIFFERENTIAL PRESSURE VALVE OF AN AIRCRAFT CABIN
UNITÉ DE COMMANDE POUR ACTIONNER UN RÉGULATEUR DE PRESSION, NOTAMMENT UN RÉGULATEUR DE PRESSION DIFFÉRENTIELLE D'UNE CABINE D'AVION

(30) Priorität: 06.12.2006 DE 102006057549
(43) Veröffentlichungstag der Anmeldung: 23.09.2009
(73) Patentinhaber: Nord-Micro AG & Co. OHG, 60388 Frankfurt (DE)
(72) Erfinder: BRACKER, Klaus-Heinrich, 63457 Hanau (DE); HAMRODI, Robert, 63165 Mühlheim am Main (DE); MAIER, Rüdiger, 63477 Maintal (DE); SINGPIEL, Roland, 60388 Frankfurt (DE); EISENLOHR, Felix, 4522 Siering (AT); POKERN, Oliver, 63486 Bruchköbel (DE)
(74) Vertreter: Seidel, Marcus
(86) Internationale Anmeldenummer: PCT/EP2007/063378
(87) Internationale Veröffentlichungsnummer: WO 2008/068295

(56) Entgegenhaltungen:
- DE-U1- 20 220 348
- US-A- 456 791
- US-A- 3 699 998
- US-A- 3 856 042
- US-A- 5 404 904

## Beschreibung

Die vorliegende Erfindung betrifft eine Steuereinheit zur Betätigung eines Druckventils, insbesondere eines Überdruckventils einer Flugzeugkabine. Die Steuereinheit umfasst einen Stellkörper und einen druckgesteuerten Aktor zur Betätigung des Stellkörpers in Abhängigkeit eines vorbestimmten Grenzdruckwerts. Der Grenzdruckwert ist mittels einer Einstelleinrichtung einstellbar.

Aus dem Stand der Technik sind verschiedenartige Steuereinheiten und Druckventile bekannt.

US 3,856,042 offenbart eine Steuereinheit zur Betätigung eines Druckventils. Das Ventil wird über einen Signalgeber und einen Schrittmotor angesteuert und regelt den Gasdruck eines aus einer Gasquelle über die Gasleitung zugeführten Gases, welches einen Aktuator steuern soll. Als Stellkörper ist eine Ventilkugel entgegen einer Feder nach links verschiebbar, so dass je nach in der Druckkammer vorhandenem Gasdruck, das über die Leitung einströmende Gas in die Druckkammer und von dort über die Ausströmöffnung und die Leitung in Richtung zum Aktuator abgeführt werden kann. Eine Bohrung, innerhalb welcher die Feder und der Stellkörper vorhanden sind, ist mittels eines Abdeckstopfens mit einem Gewinde befestigt und abgedichtet. Der Abschlussstopfen dient als Gegenlager für die Feder. Die Druckkammer ist einerseits durch die Abschlussplatte in Form eines Gehäuses und andererseits durch die flexible Membran begrenzt. Die Membran ist an einer Platte angeordnet, die über eine Feder mit einer bestimmten Kraft vorgespannt ist. An der Platte ist ein Zapfen angeschlossen, der bei einem bestimmten Grenzdruckwert den Stellkörper nach links drückt und die Öffnung freigibt. Die von der Feder auf die Platte und den Zapfen und somit den Stellkörper ausgeübte Kraft kann durch einen Einstellmechanismus eingestellt werden.

US 3,699,998 offenbart einen Druckregulator mit einem längsverschieblichen Ventilkörper, einer ersten Feder, die den Ventilkörper in die geschlossene Position vorspannt, eine zweite Feder, die den Ventilkörper in die offene Position vorspannt und eine Membran, die zwischen zwei Metallplatten befestigt ist. Über den Handgriff lässt sich die Federkraft der Feder einstellen.

Um eine Flugzeugkabine unabhängig von elektronischen Regelsystemen vor einer Überlast durch zu hohen Differenzdruck zwischen Kabinendruck und Umgebungsdruck zu schützen, wird üblicherweise ein Sicherheitsventil mit einer Steuereinheit in Form eines mechanisch-pneumatischen Druckschalters eingesetzt. Ein solcher herkömmlicher Druckschalter umfasst eine Sensoreinheit und eine Schalteinheit. Dabei weist die Sensoreinheit eine Arbeitsfeder, eine Einstellfeder und eine Rollmembran auf. Je nach Verdrehung einer Einstellschraube kann die Vorspannung der Einstellfeder verändert werden. Allerdings wird der Arbeitsbereich des Druckschalters durch die Vorspannung der Arbeitsfeder bestimmt. Diese Arbeitsfeder wird beim Zusammenbau der Steuereinheit befestigt, wodurch die Vorspannung und somit der Arbeitsbereich fest vorgegebenen ist. Der Zusammenbau erfolgt derart, dass die Einstellfeder der Arbeitsfeder entgegenwirkt, wodurch sich aus der Summe der beiden entgegen gerichteten Federvorspannkräfte der Schaltpunkt des Druckschalters ergibt. Um eine Auslösung der Schalteinheit zu erreichen, wird über die Rollmembran, an deren Wirkfläche in Folge der Beaufschlagung mit dem Differenzdruck eine Druckkraft angreift, ab einer vorbestimmten Größe des Grenzdruckwerts ein Hub erzeugt, der einen Ventilstößel der Schalteinheit betätigt und so beispielsweise einen Ventilkörper in seine Offenstellung bringt.

Bei diesen bekannten Steuereinheiten hat es sich als nachteilig erwiesen, dass die gestiegenen Anforderungen hinsichtlich der Schaltgenauigkeit und des Langzeitverhaltens auf Basis der herkömmlichen Bauart nicht mehr erfüllt werden können.

Der Erfindung liegt die Aufgabe zugrunde, eine Steuereinheit zur Betätigung eines Druckventils anzugeben, mit der eine hohe Schaltgenauigkeit erreicht wird und die im Hinblick auf ihr Langzeitverhalten den einwirkenden Einflüssen standhält.

Zur Lösung dieser Aufgabe ist bei einer Steuereinheit zur Betätigung eines Druckventils der eingangs genannten Art vorgesehen, dass die Einstelleinrichtung eine erste Einstelleinheit und eine zweite Einstelleinheit umfasst, wobei mittels der ersten Einstelleinheit der Stellkörper und mittels der zweiten Einstelleinheit der Aktor einstellbar ist.

Die erfindungsgemäße Steuereinheit beruht unter anderem auf der Erkenntnis, eine der Einstelleinheiten zur Grobeinstellung, beispielsweise des Druckarbeitsbereiches, der Ausgangsposition des Aktors oder Stellkörpers oder des Grenzdruckwerts, und eine sich von vorgenannter Einstelleinheit unterscheidende andere Einstelleinheit zur Feineinstellung wenigstens eines der vorgenannten Parameter heranzuziehen. Mit anderen Worten wird ein mindestens zweistufiges Einstellsystem vorgeschlagen, wobei mittels wenigstens einer ersten Stufe eine Grobeinstellung und mit wenigstens einer zweiten Stufe eine Feineinstellung der gewünschten Parameter erfolgt. Hierdurch ist es möglich, den Stellkörper als Bestandteil eines Ventils, beispielsweise eines Nadelventils, einzusetzen oder zur Durchflussregelung eines Druckmediums zur Steuerung eines nachgeschalteten Ventils einzusetzen. Die vorgeschlagene Steuereinheit wird auch als Druckschalter bezeichnet.

In bevorzugter Ausgestaltung sind die mehreren Einstelleinheiten derart eingerichtet und angeordnet, dass eine Veränderung der Relativposition des Stellkörpers in Bezug zum Aktor oder umgekehrt und/oder eine Veränderung der Vorspannkraft wenigstens einer mit einer Einstelleinheit, dem Stellkörper oder dem Aktor in Wirkverbindung stehenden Federeinheit möglich ist.

Die erfindungsgemäße Steuereinheit wird vorzugsweise zur Steuerung des Druckgefälles zwischen einer Flugzeugkabine und der angrenzenden Umgebung eingesetzt. Grundsätzlich eignet sich die Steuereinheit auch allgemein zur Steuerung einer pneumatisch betätigbaren Vorrichtung.

Durch eine gezielte Vorspannung der Kräfte zwischen Aktor und Stellkörper wird ein Aufschwingen des Feder/Masse-Systems unterdrückt. Ferner ist die Masse des Feder/Masse-Systems zusätzlich reduziert, wodurch die Resonananzfrequenz zu höheren, unkritischeren Werten verschoben werden kann. Diese Effekte führen zu einem verbesserten Vibrationsverhalten, d.h. zu einer hinsichtlich Vibrationen weniger empfindlichen Steuereinheit bzw. Druckschalter.

Ein weiterer Vorteil ergibt sich im Hinblick auf die Langzeitstabilität, da instabile Zustände reduziert werden können. So können beispielsweise Änderungen des Setpoints durch Verdrehen von Federn oder ein ungleichmäßiges Abheben des Federtellers vermieden werden. Das Leistungsverhalten der Steuereinheit kann wesentlich durch die Eigenschaften des Aktors definiert werden, insbesondere bei Verwendung einer Druckdose (z.B. NiBe2) als Aktor. Es ist keine Kombination von Federn mit einer Rollmembran aus Gummi erforderlich. Des Weiteren können Alterungseffekte, wie beispielsweise das Fließen der Materialien, vermieden werden.

Ebenso kann ein verbessertes Temperaturverhalten erreicht werden. So können durch entsprechende Ausgestaltung der Geometrie bzw. Dimensionen und geeignete Materialwahl die Bestandteile bzw. Bauteile die Steuereinheit so ausgelegt werden, dass sich die infolge von äußeren Einflüssen, insbesondere von Temperatureinflüssen, ergebenden Veränderungen gegenseitig weitgehend kompensieren bzw. aufheben. Auf diese Weise kann eine Steuereinheit erhalten werden, die gegenüber herkömmlichen Ausführungsformen unempfindlicher in ihrem Temperaturverhalten ist. Diesbezüglich kann auch von einer aktiven Temperaturkompensation gesprochen werden. Die Materialien können insbesondere im Hinblick auf geeignete Längenausdehnungskoeffizienten bzw. Wärmeausdehnungskoeffizient und/oder Elastizitätsmodule gewählt werden, um eine weitgehende Temperaturkompensation zu erreichen.

Insbesondere kann durch das Paaren der Bestandteile, d.h. beispielsweise die gegenseitige Abstimmung der Materialien und Längenausdehnungskoeffizienten von Druckdose in Bezug auf Gehäuse und Stellkörper, die Temperaturempfindlichkeit gegenüber einer unkompensierten Druckdose deutlich verbessert werden.

Vorteilhafte Ausgestaltungen der erfindungsgemäßen Steuereinheit sind in den Ansprüchen 2 bis 25 beschrieben.

Eine vorteilhafte Ausgestaltung besteht darin, dass die zweite Einstelleinheit zur Grobeinstellung des Grenzdruckwerts und die erste Einstelleinheit zur Feineinstellung des Grenzdruckwerts oder umgekehrt eingerichtet sind. Dies ermöglicht die präzise Einstellung des Ansprechdrucks beziehungsweise Schaltpunkts zur Betätigung des Stellkörpers durch den Aktor.

Vorteilhafterweise umfasst der Aktor einen druckabhängig verformbaren Membrankörper. Mit anderen Worten verformt sich der Membrankörper in Abhängigkeit des beaufschlagten Druckes mehr oder weniger. In vorteilhafter Ausgestaltung weist der Membrankörper einen Balg oder eine Druckdose, insbesondere aus Metall, auf. Im Unterschied zum herkömmlichen Aufbau mit zwei Druckfedern und einer Rollmembran, weist ein solcher Membrankörper ein verbessertes Schaltverhalten auf Grund seiner geringeren Hysterese auf. Auf diese Weise kann beispielsweise ein durch den Aktor zu erzeugender Hub zur Betätigung des Stellkörper ausschließlich durch eine metallische Druckdose oder einen Metallbalg bereitgestellt werden. Ferner weisen die ein- oder mehrstufig aufgebauten Druckdosen ein gutes Langzeitverhalten auf.

Bei einer weiteren vorteilhaften Ausgestaltung weist die erste Einstelleinheit und/oder die zweite Einstelleinheit ein variabel justierbares Stellelement auf, insbesondere ein verdrehbares Gewindeelement, um den Abstand zwischen Stellkörper und Aktor zu verändern. So kann mittels einfacher Bauteile, wie einer Gewindehülse, eine fein justierbare Einstellung mit hoher Reproduzierbarkeit erreicht werden.

In einer vorteilhaften Weiterbildung umfasst die erste Einstelleinheit einen ersten Träger, über den der Stellkörper in einer ersten Kammer gehalten und variabel positionierbar ist und/oder die zweite Einstelleinheit einen zweiten Träger, über den der Aktor in einer zweiten Kammer gehalten und variabel positionierbar ist. Auf diese Weise kann der Aktor, vorzugsweise eine Druckdose, über den zweiten Träger in der zweiten Kammer gehalten und einem Differenzdruck aus der Differenz zwischen Kabinendruck und Umgebungsdruck ausgesetzt werden.

In einer vorteilhaften Ausgestaltung umfasst der erste Träger und/oder der zweite Träger ein Trägergewinde, das vorzugsweise mit einem Gehäusegewinde in Eingriff bringbar ist. So kann die erste Einstelleinheit beziehungsweise die zweite Einstelleinheit auf einfache Weise mittels des ersten Trägers beziehungsweise mittels des zweiten Trägers angebracht werden, und lediglich durch Verdrehen eines oder aller Träger der Abstand zwischen Stellkörper und Aktor verändert und der Grenzdruckwert justiert werden. Zweckmäßigerweise ist der erste und/oder zweite Träger jeweils über eine mit einem Gewinde ausgestattete Öffnung in der Gehäusewandung verdrehbar gehalten. Die Gewinde dienen neben der Positionierung von Stellkörper und/oder Aktor zugleich zur Befestigung der Träger beziehungsweise Einstelleinheiten an dem Gehäuse der Steuereinheit.

Von Vorteil ist ferner; wenn der erste Träger und/oder der zweite Träger ein Fixierelement zur Sicherung des ersten Trägers und/oder des zweiten Trägers umfasst, wobei das Trägergewinde vorzugsweise mit einem Gehäusegewinde in Eingriff bringbar ist. Ferner kann das Fixierelement mit dem Trägergewinde in Eingriff gebracht werden. So lassen sich die gewünschten Funktionen der Bauteile durch einfache Gewindeelemente und eine geringe Anzahl von erforderlichen Bauteilen erzielen.

Vorzugsweise ist die zweite Kammer über einen ersten Kanal mit einem Umgebungsdruck und der Aktor über einen zweiten Kanal mit einem Kabinendruck beaufschlagbar.

Zur weiteren Reduzierung der Bauteile der Steuereinheit bildet der zweite Träger zugleich den zweiten Kanal. Mit anderen Worten ist der zweite Kanal in dem zweiten Träger integriert und verläuft vorzugsweise entlang eines inneren rohrförmigen Kanals.

Bei einer weiteren bevorzugten Ausgestaltung ist eine Federeinheit mit dem Aktor und/oder mit dem Stellkörper gekoppelt. Mit anderen Worten kann der Aktor, der Stellkörper oder sowohl Stellkörper als auch Aktor mit einer Federeinheit in Wirkverbindung stehen, die zugleich Bestandteil einer oder mehrerer der Einstelleinheiten sein kann. In einer Alternative kann die Federeinheit zwischen Aktor und Stell körper zwischengeschaltet sein.

Im Hinblick auf den Stellkörper erweist es sich als vorteilhaft, wenn dieser einen verschiebbar geführten Kolben, insbesondere einen Ventilstößel, umfasst. Ein solcher Kolben oder Ventilstößel kann beispielsweise über die Federeinheit in einer Offenstellung oder einer Schließstellung vorgespannt sein. Zugleich kann die Vorspannung der Federeinheit dazu benutzt werden, den Schaltpunkt je nach Vorspannung in einem geringen Bereich zu variieren.

Bei einer vorteilhaften Weiterbildung umfasst der Stellkörper einen Ventilkörper zur Freigabe oder Sperrung einer Anschlussleitung, die vorzugsweise mit der ersten Kammer verbunden ist. Auf diese Weise kann die erste Kammer wenigstens teilweise Bestanteil der Anschlussleitung sein, wodurch der Ventilkörper einen Durchfluss durch die Anschlussleitung sperren oder freigeben kann. Vorteilhafterweise weist der Ventilkörper eine Dichteinheit, insbesondere eine Dichtkante, zur Freigabe oder Sperrung der Anschlussleitung auf. Beispielsweise kann die Dichtkante durch einen Dichtkegel bereitgestellt werden, der durch eine Kraft, beispielsweise durch die Federeinheit in seiner Schließstellung gehalten ist.

Vorteilhafterweise umfasst die Steuereinheit ein Gehäuse, wobei die erste Einstelleinheit und die zweite Einstelleinheit von einer Gehäuseseite aus zugänglich ausgebildet und angeordnet sind. Dies ermöglicht eine einfache Einstellung der Einstelleinheiten auch bei den häufig engen Platzverhältnissen. Grundsätzlich können die Einstelleinheiten aber auch derart ausgebildet und angeordnet werden, dass sie von unterschiedlichen Gehäuseseiten oder Gehäuseabschnitten aus bedienbar sind.

Bei einer weiteren bevorzugten Ausgestaltungsform sind zur Kompensation von Temperatureinflüssen die Dimensionen und Materialkennwerte der einzelnen Bestandteile der Steuereinheit, insbesondere des Stellkörpers, des Ventilstößels, des Aktors, der Einstellheiten, der Träger, der Federeinheit und/oder des Gehäuses beziehungsweise einzelner Gehäuseabschnitte, gezielt vorab aufeinander abgestimmt. Auf diese Weise können Längenausdehnungen und Einflüsse auf den Elastizitätsmodul kompensiert und die Temperaturstabilität der Steuereinheit gewährleistet werden. Vorteilhafterweise werden die unterschiedlichen Wärmeausdehnungen der Bauteile derart genutzt, dass die einzelnen Effekte aus dem jeweiligen Temperatureinfluss auf den Elastizitätsmodul des Bauteils in der Summe kompensiert werden. Auf diese Weise kann der auf den Aktor, beispielsweise in Form einer Druckdose, einwirkende Temperatureinfluss ausgeglichen werden. Weiterhin ist die Hub/Druck-Charakteristik des Dose so ausgelegt, dass die Temperaturkompensation über einen weiten Druckbereich (Nutzbereich) eine gleich bleibende Wirkung zeigt.

In bevorzugter Ausgestaltung umfassen der erste Gehäuseabschnitt, der zweite Gehäuseabschnitt, der Stellkörper, der Aktor, insbesondere die Druckdose, wenigstens eine der Einstelleinheiten, wenigstens einer der Träger und/oder die Federeinheit als Materialkennwert wenigstens einen Längenausdehnungskoeffizienten, wobei die Längenausdehnungskoeffizienten wenigstens zweier der vorgenannten Bestandteile zur Kompensation von Temperatureinflüssen gezielt aufeinander abgestimmt sind.

Ferner kann der erste Gehäuseabschnitt, der zweite Gehäuseabschnitt, der Stellkörper, der Aktor, insbesondere die Druckdose, wenigstens eine der Einstelleinheiten, wenigstens einer der Träger und/oder die Federeinheit als Materialkennwert wenigstens einen Elastizitätsmodul umfassen, wobei die Elastizitätsmodule wenigstens zweier der vorgenannten Bestandteile zur Kompensation von Temperatureinflüssen gezielt aufeinander abgestimmt sind.

Durch geeignete Wahl der Längenausdehnungskoeffizienten bzw. Wärmeausdehnungskoeffizienten und/oder Elastizitätsmodule und/oder der Geometrie bzw. Dimensionen können die Bestandteile bzw. Bauteile der Steuereinheit so ausgelegt werden, dass sich die infolge von äußeren Einflüssen, insbesondere von Temperatureinflüssen, ergebenden Veränderungen gegenseitig weitgehend kompensieren bzw. aufheben. Auf diese Weise kann eine Steuereinheit erhalten werden, die gegenüber herkömmlichen Ausführungsformen um den Faktor 10 bis 20 unempfindlicher in ihrem Temperaturverhalten ist. Diesbezüglich kann auch von einer aktiven Temperaturkompensation gesprochen werden.

Insbesondere kann durch das Paaren der Bestandteile, d.h. beispielsweise die gegenseitige Abstimmung der Materialien und Längenausdehnungskoeffizienten von Druckdose in Bezug auf Gehäuse und Stellkörper, die Temperaturempfindlichkeit gegenüber einer unkompensierten Druckdose um den Faktor 10 bis 20 verbessert werden.

Des Weiteren kann die Vibrationsempfindlichkeit gegenüber herkömmlichen Ausführungsformen mit beispielsweise einer Gummimembran um etwa den Faktor 30 verbessert werden.

Auch im Hinblick auf die Gravitationsempfindlichkeit kann eine Verbesserung um einen Faktor von etwa 4 erreicht werden. Ferner kann eine gute Langzeitstabilität erreicht werden (beispielsweise kleiner als etwa 2 hPa nach 1 Million Druckzyklen).

Ferner ist eine solche Steuereinheit weniger hystereseanfällig.

Vorteilhafterweise hat der Aktor einen Arbeitsbereich und eine Kennlinie und es ist innerhalb des Arbeitsbereiches eine im Wesentlichen konstante Temperaturkompensation einstellbar.

Bevorzugt umfasst der Aktor eine Druckdose, die einen Arbeitsbereich von etwa 300 mbar bis etwa 900 mbar, insbesondere von etwa 500 mbar bis etwa 700 mbar, und die Kennlinie der Druckdose so ausgelegt ist, dass innerhalb des Arbeitsbereiches eine im Wesentlichen konstante Temperaturkompensation einstellbar ist.

In bevorzugter Ausgestaltung sind der Stellkörper und der Aktor in einer ersten Stellung in einem vorbestimmten Abstand voneinander beabstandet und in einer zweiten Stellung zur Betätigung des Stellkörpers in Kontakt. In Folge des in der ersten Stellung vorhandenen Abstandes soll vermieden werden, dass aufgrund von Vibrationen und dabei auftretender Reibung zwischen Bauteilen ein Verschleiß dieser Bauteile eintritt. Ferner entstehen bei einer derartigen Ausgestaltung auch keine Eigenschwingungen. Der Abstand kann in Abhängigkeit des vorbestimmten Grenzdruckwertes beziehungsweise Schaltpunktes gewählt werden.

Bei einer weiteren vorteilhaften Ausgestaltung ist vorgesehen, dass Stellkörper und Aktor während des bestimmungsgemäßen Gebrauchs der Steuereinheit dauerhaft, vorzugsweise permanent, in Kontakt stehen. Dies wird vorzugsweise dadurch erreicht, dass der Stellkörper durch die von der Federeinheit ausgeübte Kraft dauerhaft, vorzugsweise permanent, in der zweiten Stellung gehalten ist. Mit anderen Worten wird der Stellkörper in einer an den Aktor gedrückten Stellung gehalten. Die entsprechend benötigte Vorspannkraft der Federeinheit kann beispielsweise wiederum über die Träger eingestellt werden. Auf diese Weise können etwaige Vibrationen und dadurch bedingter Verschleiß der in Kontakt kommenden Bauteile sowie eine Drift des Schaltpunktes reduziert beziehungsweise vermieden werden.

Ferner kann der Aktor mit einer Betätigungseinheit, insbesondere einer Abtastplatte, versehen sein, die mit dem Stellkörper in Kontakt bringbar ist. Eine solche Platte besteht aus einem verschleißfesten Material, beispielsweise aus rostfreiem Federstahl, Edelstein oder Keramik, um einen Abtrag und damit eine Drift aufgrund einer Längenänderung des Ventilstößels zu vermeiden.

Nachfolgend wird die Erfindung unter Bezugnahme auf die Zeichnungen weiter erläutert. Dabei zeigen schematisch:
- Fig. 1: einen Längsschnitt durch eine erste Ausführungsform der erfin- dungsgemäßen Steuereinheit, und
- Fig. 2: einen Längsschnitt durch eine zweite Ausführungsform der er- findungsgemäßen Steuereinheit.

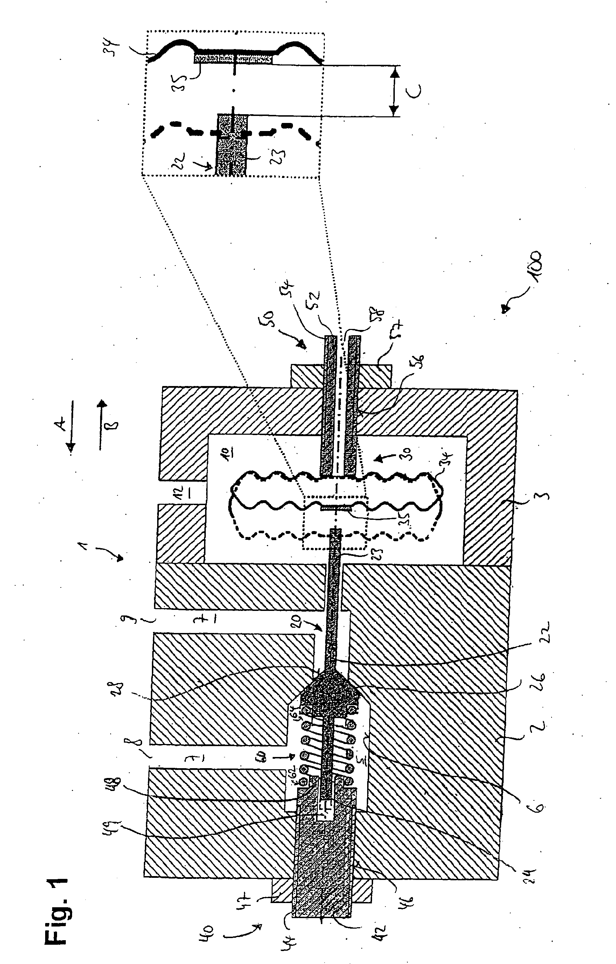

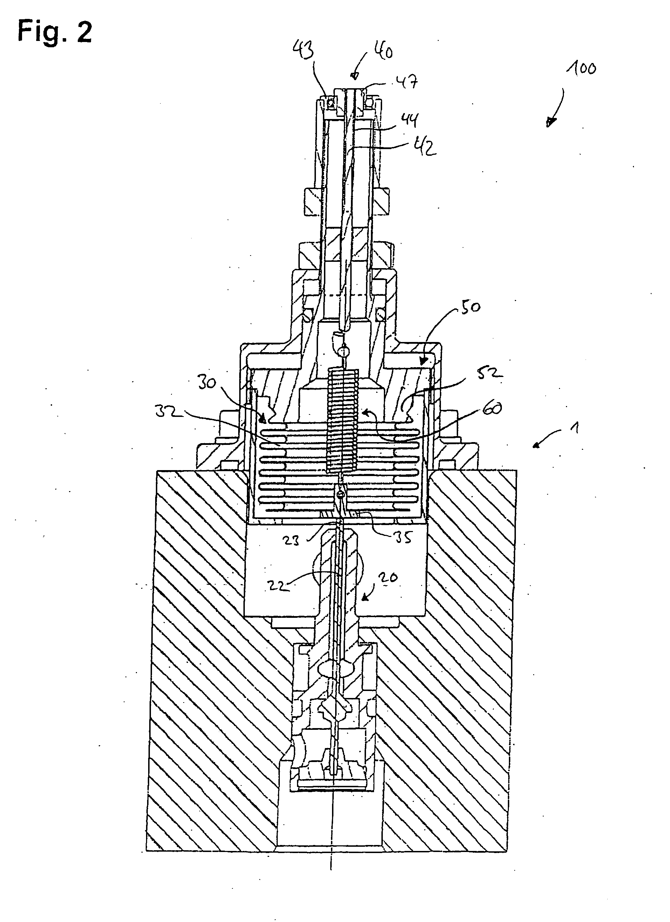

Die in Fig. 1 und 2 dargestellten Steuereinheiten 100 dienen zur Betätigung eines Überdruckventils einer Flugzeugkabine.

Die in Fig. 1 dargestellte Steuereinheit 100 umfasst ein Gehäuse 1 mit einem ersten Gehäuseabschnitt 2 und einem zweiten Gehäuseabschnitt 3. Die beiden Gehäuseabschnitte 2, 3 sind miteinander verschraubt. In dem ersten Gehäuseabschnitt 2 ist eine Anschlussleitung 7 mit einer ersten Öffnung 8 und einer zweiten Öffnung 9 angeordnet. Eine erste Kammer 5 ist abschnittsweise Bestandteil der Anschlussleitung 7 und weist eine Innenwandung 6 auf. Der zweite Gehäuseabschnitt 3 weist eine zweite Kammer 10 auf, der über einen Kanal 12 ein Umgebungsdruck zugeführt werden kann.

Ferner umfasst die Steuereinheit 100 einen durch den ersten Gehäuseabschnitt 2 zwangsgeführten Stellkörper 20 in Form eines Ventilstößels 22 und einen in dem zweiten Gehäuseabschnitt 3 in der zweiten Kammer 10 angeordneten Aktor 30. Der Ventilstößel 22 hat ein erstes Ende 23 und ein zweites Ende 24 und weist zwischen diesen Enden 23, 24 einen Dichtkegel 26 als Ventilkörper zur Sperrung oder Freigabe der Anschlussleitung 7 auf. In der in Fig. 1 gezeigten Schließstellung des Dichtkegels 26 liegt eine Dichtkante 28 des Dichtkegels 26 dicht an einer Innenwandung 6 der ersten Kammer 5 an. Der Aktor 30 ist als Membrankörper in Form einer Druckdose 34 ausgebildet. Diese Druckdose 34 ist in der zweiten Kammer 10 positioniert und weist eine Abtastplatte 35 auf, die zum Kontakt mit dem ersten Ende 23 des Ventilstößels 22 vorgesehen ist.

Der Stellkörper 20 ist über eine erste Einstelleinheit 40 bezüglich des ersten Gehäuseabschnitts 2 einerseits lagemäßig variabel positionierbar und andererseits an diesem festlegbar. Für diesen Zweck umfasst die erste Einstelleinheit 40 einen ersten Träger 42 in Form einer Einstellhülse mit einem außenseitigen Stellgewinde als Trägergewinde 44, das mit dem ersten Gehäuseabschnitt 2 über ein Gehäusegewinde 46 in Eingriff steht. Ein Fixierelement 47 in Form einer Kontermutter dient zur weiteren Fixierung des ersten Trägers 42 an dem Gehäuse 1.

An dem in die Kammer 5 ragenden Ende des ersten Trägers 42 ist ein Vorsprung 48 vorgesehen, an dem eine Federeinheit 60 mit ihrem ersten Ende 62 befestigt ist. Ein zweites Ende 64 der Federeinheit 60 ist an einem Vorsprung des Dichtkegels 26 des Stellkörpers 20 befestigt. Die Federeinheit 60 koppelt den Stellkörper 20 mit der ersten Einstelleinheit 40. Die von der Federeinheit 60 ausgeübte Vorspannung wirkt als in eine Richtung B wirkende Rückstellkraft auf den Ventilstößel 22 und hält diesen bei einem unterhalb des Grenzdruckwertes liegenden Ist-Druck in seiner dichtend an die Innenwandung 6 gedrückten Schließstellung.

Der Aktor in Form der Druckdose 34 ist über eine zweite Einstelleinheit 50 bezüglich des zweiten Gehäuseabschnitts 3 einerseits lagemäßig variabel positionierbar und andererseits an diesem festlegbar. Für diesen Zweck umfasst die zweite Einstelleinheit 50 einen zweiten Träger 52 in Form einer Einstellhülse mit einem außenseitigen Stellgewinde als Trägergewinde 54, das mit dem zweiten Gehäuseabschnitt 3 über ein Gehäusegewinde 56 in Eingriff steht. Ein Fixierelement 57 dient zur weiteren Fixierung des zweiten Trägers 52 an dem Gehäuse 1. Ferner weist der zweite Träger 52 einen inneren rohrförmigen Kanal 58 zur Bildung einer Verbindung zwischen der Kabine und dem Inneren der Druckdose 34 auf. So kann das in der Kabine vorherrschende Druckmedium ins Innere der Druckdose 34 geleitet werden und die Druckdose 34 innenseitig mit dem Kabinendruck beaufschlagt werden.

Zur Einstellung des Grenzwertdruckes ab dem die Druckdose 34 den Ventilstößel 22 betätigt, wird zunächst der zweite Träger 52 verdreht. Auf diese Weise wird der in dem vergrößerten Ausschnitt in Fig. 1 gezeigte Abstand C zwischen der Abtastplatte 35 und dem ersten Ende 23 des Ventilstößels 22 verringert oder vergrößert und damit der Schaltbereich der Steuereinheit 100 eingestellt. Die exakte Einstellung des Grenzdruckwerts beziehungsweise des Schaltpunktes erfolgt durch Verdrehen des ersten Trägers 42 und die dadurch bewirkte Veränderung der Vorspannung der Federeinheit 60 auf den Ventilstößel 22. Nach Abschluss dieser Einstellung werden der erste Träger 42 und der zweite Träger 52 mittels der Fixierelemente 47, 57 an dem Gehäuse 1 gesichert.

In einer Ausgangssituation der Steuereinheit 100 befinden sich die erste Einstelleinheit 40 und die zweite Einstelleinheit 50 in den in Fig. 1 gezeigten Stellungen. Ferner befindet sich die Druckdose 34 in der mittels durchgezogener Linie gekennzeichneten Ausgangsstellung. In dieser Stellung ist zwischen dem ersten Ende 23 des Ventilstößels 22 und der Abtastplatte 35 ein Abstand C vorhanden (siehe vergrößerte Darstellung in Fig. 1). Der Ventilstößel 22 befindet sich in seiner Schließstellung, in welcher der Dichtkegel 26 mit seiner Dichtkante 28 an der Innenwandung 6 der ersten Kammer 5 dichtend anliegt.

Über den durch den zweiten Träger 52 gebildeten Kanal 58 gelangt das in der Kabine vorherrschende Druckmedium ins Innere der Druckdose 34 und übt einen dem Kabinendruck entsprechenden Druck auf die Membran der Druckdose 34 aus. Des Weiteren gelangt ein Druckmedium der Umgebung über den Kanal 12 in die zweite Kammer 10 und beaufschlagt die Außenseite der Druckdose 34 mit dem Umgebungsdruck. Die Differenz zwischen dem im Inneren der Druckdose 34 herrschenden Kabinendruck und dem auf die Außenseite der Druckdose 34 herrschenden Umgebungsdruck ergibt den auf die Druckdose 34 einwirkenden Differenzdruck, der mittels der Steuereinheit 100 überwacht werden soll und bei Überschreitung des mittels der Einstelleinheiten 40, 50 eingestellten Grenzdruckwerts verändert werden soll.

Im vorliegenden Ausführungsbeispiel soll nun im Weiteren der Kabinendruck größer als der Umgebungsdruck sein. Dadurch ergibt sich ein auf die Druckdose einwirkender Differenzdruck, der zu einer Verformung der Druckdose 34 in einer Richtung A in die mit gestrichelten Linien dargestellte Stellung führt. Für den Fall, dass der durch die Verformung bewirkte Hub der Abtastplatte 35 größer als der Abstand C ist, wird der Ventilstößel 22 nur dann weiter in die Richtung A gedrückt, falls die von der Druckdose 34 ausgehende Kraft auf den Ventilstößel 22 (in Richtung A) größer als die durch die Federeinheit 60 (in Richtung B) bewirkte Vorspannung ist. In diesem Fall gelangt der Dichtkegel 26 sodann außer Kontakt mit der Innenwandung 6 und in seine Öffnungsstellung. Der Ventilstößel 22 befindet sich nun in seiner Offenstellung. Jetzt ist ein Durchfluss eines weiteren Druckmediums durch die Anschlussleitung 7 möglich. Dieser Durchfluss kann beispielsweise ein nachgeschaltetes Überdruckventil steuern. Ebenso kann der Ventilstößel 22, die Federeinheit 60 und der erste Träger 42 ein Schaltventil bilden, das durch die Druckdose 34 gesteuert wird.

Bei einer später folgenden Abnahme des anliegenden Differenzdrucks geht die Verformung der Druckdose 34 wieder zurück. Sobald die durch die Federeinheit 60 bewirkte Vorspannung in Richtung B größer als die durch den auf die Druckdose 34 einwirkende Differenzdruck bewirkte Kraft ist, gelangt der Ventilstößel 22 in die Schließstellung zurück, bei der der Dichtkegel 26 wieder dichtend an der Innenwandung 6 der ersten Kammer 5 anliegt. Folglich ist der Durchfluss durch die Anschlussleitung 7 gesperrt und es wird auch ein etwaig nachgeschaltetes Überdruckventil entsprechend gesteuert.

Die in Fig. 2 gezeigte Steuereinheit 100 unterscheidet sich im Aufbau von der ersten Ausführungsform im Wesentlichen dadurch, dass der erste Träger 42 und der zweite Träger 52 von einer Gehäuseseite aus zugänglich und bedienbar sind. Wie Fig. 2 zeigt, sind infolge dieses Aufbaus die beiden Einstelleinheiten 40, 50 von der oberen Gehäuseseite zugänglich. Der Membrankörper 30 des Aktors ist als Metallbalg 32 ausgeführt. Zudem verbindet die Federeinheit 60 den ersten Träger 42 mit der Abtastplatte 35, die an das untere Ende des Metallbalgs 32 angeschlossen ist. Hierbei verläuft die Federeinheit 60 koaxial und wenigstens teilweise im Inneren des Metallbalges 32. Die Steifigkeit der Federeinheit 60 ist geringer als die Steifigkeit des Metallbalges 32. Ferner ist der Ventilstößel 22 in Fig. 2 in seiner Schließstellung gezeigt und Bestandteil eines Nadelventils.

In ähnlicher Funktionsweise, wie zu Fig. 1 erläutert, dehnt sich der Metallbalg 32 bei Überschreitung eines mittels der Einstelleinheiten 40, 50 eingestellten Grenzdruckwertes soweit nach unten aus, dass er mittels der Abtastplatte 35 oder einer damit verbundenen starren Platte den Ventilstößel 22 betätigt und nach unten drückt. So kann das Nadelventil eine angrenzende pneumatisch gesteuerte Vorrichtungen (nicht dargestellt), wie insbesondere ein Überdruckventil für eine Flugzeugkabine, steuern.

Auch bei dieser Ausführungsform erfolgt die Grobeinstellung des Grenzdruckwerts über die zweite Einstelleinheit 50, insbesondere mittels des zweiten Trägers 52, und die Feineinstellung über die erste Einstelleinheit 40, insbesondere mittels des ersten Trägers 42. Durch Verdrehen einer Einstellhülse 43 des ersten Trägers 42 wird die Vorspannung der Federeinheit 60 eingestellt. Zudem ermöglicht die Verdrehung der Einstellhülse 43 und des zweiten Trägers 52 die Veränderung des Abstands zwischen dem ersten Ende 23 des Ventilstößels 22 und der Abtastplatte 35.

Beide Ausführungsformen zeichnen sich insbesondere dadurch aus, dass mittels der ersten Einstelleinheit 40 und der zweiten Einstelleinheit 50 eine Einstelleinrichtung zur exakten Einstellung des Grenzdruckwerts beziehungsweise Schaltpunkts der Steuereinheit 100 über eine Grob- und eine Feineinstellung geschaffen wird.

Ferner gewährleistet der Einsatz eines metallischen Membrankörpers 32, 34 für den Aktor 30 ein gutes Langzeitverhalten. Zudem ist die Anzahl an erforderlichen Bauteilen im Vergleich zur herkömmlichen Bauart erheblich reduziert.

Des Weiteren zeichnet sich insbesondere die Ausführungsform gemäß Fig. 1 dadurch aus, dass die Steuereinheit 100 weitgehend unempfindlich gegenüber äußeren Einflüssen wie Vibration und/oder Temperatur ist beziehungsweise darauf abgestimmt werden kann.

So werden zur Temperaturkompensation die unterschiedlichen Wärmeausdehnungen der Bauteile genutzt, beispielsweise durch gezielt vorbestimmte Festlegung der Materialkennwerte, insbesondere hinsichtlich des Wärmeausdehnkoeffizienten, so dass in der Summe der Effekt aus dem Temperatureinfluss auf den Elastizitätsmodul des Aktors 30, insbesondere der Druckdose 34, kompensiert wird.

Zusätzlich oder alternativ können die Kennwerte der Wirkflächen der Bauteile und insbesondere die Vorspannung der Federeinheit 60 vorab aufeinander abgestimmt werden, so dass im Grenzdruckwert beziehungsweise Schaltpunkt im Hinblick auf das Vibrationsverhalten ein optimierter Gleichgewichtszustand vorliegt. Dies wird vorzugsweise dadurch erreicht, dass der Ventilstößel 22 mittels der Federeinheit 60 permanent in einer Stellung gehalten ist, bei der das erste Ende 23 des Ventilstößels 22 an die Abtastplatte 35 drückend gehalten ist. Auf diese Weise kann der Verschleiß des ersten Endes 23 reduziert beziehungsweise vermieden werden. Zudem wird eine ungewollte Verschiebung des Schaltpunktes verhindert.

### Bezugszeichenliste

- 1: Gehäuse
- 2: erster Gehäuseabschnitt
- 3: zweiter Gehäuseabschnitt
- 5: erste Kammer
- 6: Innenwandung
- 7: Anschlussleitung
- 8: Öffnung
- 9: Öffnung
- 10: zweite Kammer
- 12: Kanal
- 20: Stellkörper
- 22: Ventilstößel
- 23: erstes Ende
- 24: zweites Ende
- 26: Dichtkegel
- 28: Dichtkante
- 30: Aktor
- 32: Balg
- 34: Druckdose
- 35: Abtastplatte
- 40: erste Einstelleinheit
- 42: erster Träger
- 43: Einstellhülse
- 44: Trägergewinde
- 46: Gehäusegewinde

- 47: Fixierelement
- 48: Vorsprung
- 49: Nut
- 50: zweite Einstelleinheit
- 52: zweiter Träger
- 54: Trägergewinde
- 56: Gehäusegewinde
- 57: Fixierelement
- 58: Kanal
- 60: Federeinheit
- 62: erstes Ende
- 64: zweites Ende
- 100: Steuereinheit
- A: Richtung
- B: Richtung
- C: Abstand

## Patentansprüche

1. Steuereinheit (100) zur Betätigung eines Druckventils, insbesondere zur Betätigung eines Überdruckventils einer Flugzeugkabine, mit einem Stellkörper (20) und einem druckgesteuerten Aktor (30) zur Betätigung des Stellkörpers (20) in Abhängigkeit eines vorbestimmten Grenzdruckwertes, wobei der Grenzdruckwert mittels einer Einstelleinrichtung einstellbar ist, **dadurch gekennzeichnet, dass** die Einstelleinrichtung eine erste Einstelleinheit (40) und eine zweite Einstelleinheit (50) umfasst, wobei mittels der ersten Einstelleinheit (40) der Stellkörper (20) und mittels der zweiten Einstelleinheit (50) der Aktor (30) einstellbar ist.

2. Steuereinheit (100) nach Anspruch 1, **dadurch gekennzeichnet, dass** die zweite Einstelleinheit (50) zur Grobeinstellung des Grenzdruckwertes und die erste Einstelleinheit (40) zur Feineinstellung des Grenzdruckwertes eingerichtet sind.

3. Steuereinheit (100) nach einem der Ansprüche 1 oder 2, **dadurch gekennzeichnet, dass** der Aktor (30) einen druckabhängig verformbaren Membrankörper (32, 34) umfasst, wobei vorzugsweise der Membrankörper einen Balg (32) oder eine Druckdose (34), insbesondere aus Metall, umfasst.

4. Steuereinheit (100) nach einem der Ansprüche 1 bis 3, **dadurch gekennzeichnet, dass** die erste Einstelleinheit (40) oder die zweite Einstelleinheit (50) ein variabel justierbares Stellelement (42, 52), insbesondere ein verdrehbares Gewindeelement aufweist, um den Abstand zwischen Stellkörper (20) und Aktor (30) zu verändern.

5. Steuereinheit (100) nach einem der Ansprüche 1 bis 4, **dadurch gekennzeichnet, dass** die erste Einstelleinheit (40) einen ersten Träger (42) umfasst, über den der Stellkörper (20) in einer ersten Kammer (5) gehalten und variabel positionierbar ist und/oder die zweite Einstelleinheit (50) einen zweiten Träger (52) umfasst, über den der Aktor (30) in einer zweiten Kammer (10) gehalten und variabel positionierbar ist.

6. Steuereinheit (100) nach Anspruch 5, **dadurch gekennzeichnet, dass** die zweite Kammer (10) über einen ersten Kanal (12) mit einem Umgebungsdruck und der Aktor (30) über einen zweiten Kanal (58) mit einem Kabinendruck beaufschlagbar ist, wobei vorzugsweise der zweite Träger (52) den zweiten Kanal (58) bildet.

7. Steuereinheit (100) nach einem der Ansprüche 1 bis 6, **dadurch gekennzeichnet, dass** eine Federeinheit (60) mit dem Aktor (30) und/oder mit dem Stellkörper (20) gekoppelt ist.

8. Steuereinheit (100) nach einem der Ansprüche 1 bis 7, **dadurch gekennzeichnet, dass** der Stellkörper (20) einen Ventilkörper (26) zur Freigabe oder Sperrung einer Anschlussleitung (7) umfasst, die insbesondere mit der ersten Kammer (5) verbunden ist.

9. Steuereinheit (100) nach einem der Ansprüche 1 bis 8, **gekennzeichnet durch** ein Gehäuse (1), wobei die erste Einstelleinheit (40) und die zweite Einstelleinheit (50) von einer Gehäuseseite (2) aus zugänglich ausgebildet und angeordnet sind.

10. Steuereinheit (100) nach einem der Ansprüche 1 bis 9, **dadurch gekennzeichnet, dass** zur Kompensation von Temperatureinflüssen die Dimensionen und Materialkennwerte der einzelnen Bestandteile der Steuereinheit (100), insbesondere des Stellkörpers (20), des Ventilstößels (22), des Aktors (30, 32, 34), der Einstelleinheiten (40, 50), der Träger (42, 52), der Federeinheit (60) und/oder des Gehäuses (1), gezielt vorab aufeinander abgestimmt sind.

11. Steuereinheit (100) nach Anspruch 10, **dadurch gekennzeichnet, dass** der erste Gehäuseabschnitt (3), der zweite Gehäuseabschnitt (4), der Stellkörper (20), der Aktor (30), insbesondere die Druckdose (34), wenigstens eine der Einstelleinheiten (40, 50), wenigstens einer der Träger (42, 52) und/oder die Federeinheit (60) als Materialkennwert wenigstens einen Längenausdehnungskoeffizienten umfassen, wobei die Längenausdehnungskoeffizienten wenigstens zweier der vorgenannten Bestandteile zur Kompensation von Temperatureinflüssen gezielt aufeinander abgestimmt sind,
und/oder dass der erste Gehäuseabschnitt (3), der zweite Gehäuseabschnitt (4), der Stellkörper (20), der Aktor (30), insbesondere die Druckdose (34), wenigstens eine der Einstelleinheiten (40, 50), wenigstens einer der Träger (42, 52) und/oder die Federeinheit (60) als Materialkennwert wenigstens einen Elastizitätsmodul umfassen, wobei die Elastizitätsmodule wenigstens zweier der vorgenannten Bestandteile zur Kompensation von Temperatureinflüssen gezielt aufeinander abgestimmt sind.

12. Steuereinheit (100) nach einem der Ansprüche 1 bis 11, **dadurch gekennzeichnet, dass** der Aktor (30) einen Arbeitsbereich und eine Kennlinie hat und innerhalb des Arbeitsbereiches eine im Wesentlichen konstante Temperaturkompensation einstellbar ist,
wobei vorzugsweise der Aktor (30) eine Druckdose (34) umfasst, die einen Arbeitsbereich von etwa 300 mbar bis etwa 900 mbar, insbesondere von etwa 500 mbar bis etwa 700 mbar, und die Kennlinie der Druckdose (34) so ausgelegt ist, dass innerhalb des Arbeitsbereiches eine im Wesentlichen konstante Temperaturkompensation einstellbar ist.

13. Steuereinheit (100) nach einem der Ansprüche 1 bis 12, **dadurch gekennzeichnet, dass** Stellkörper (20) und Aktor (30) in einer ersten Stellung in einem vorbestimmten Abstand (C) voneinander beabstandet und in einer zweiten Stellung zur Betätigung des Stellkörpers (20) in Kontakt sind.

14. Steuereinheit (100) nach einem der Ansprüche 1 bis 13, **dadurch gekennzeichnet, dass** Stellkörper (20) und Aktor (30) während des bestimmungsgemäßen Gebrauchs der Steuereinheit (100) dauerhaft, vorzugsweise permanent, in Kontakt sind,
und/oder dass der Stellkörper (20) durch die von der Federeinheit (60) ausgeübte Kraft dauerhaft, vorzugsweise permanent, in der zweiten Stellung gehalten ist.

15. Steuereinheit (100) nach einem der Ansprüche 1 bis 14, **dadurch gekennzeichnet, dass** der Aktor (30) mit einer Betätigungseinheit, insbesondere einer Abtastplatte (35), versehen ist, die mit dem Stellkörper (20) in Kontakt bringbar ist.

## Claims

1. A control unit (100) for operating a pressure valve, in particular for operating a pressure relief valve of an aircraft cabin, comprising a control body (20) and a pressure-controlled actuator (30) for actuating the control body (20) as a function of a predetermined pressure limit value, wherein the pressure limit value is adjustable by means of an adjustment device, **characterised in that** the adjustment device comprises a first adjustment unit (40) and a second adjustment unit (50), wherein the control body (20) is adjustable by means of the first adjustment unit (40) and the actuator (30) is adjustable by means of the second adjustment unit (50).

2. The control unit (100) according to claim 1, **characterised in that** the second adjustment unit (50) is set up for coarse adjustment of the pressure limit value and the first adjustment unit (40) is set up for fine adjustment of the pressure limit value.

3. The control unit (100) according to any one of claims 1 or 2, **characterised in that** the actuator (30) comprises a membrane body (32, 34) deformable as a function of pressure, wherein the membrane body preferably comprises a bellows (32) or a pressure capsule (34), in particular of metal.

4. The control unit (100) according to any one of claims 1 to 3, **characterised in that** the first adjustment unit (40) or the second adjustment unit (50) includes a variably adjustable control element (42, 52), in particular a rotatable threaded element, to change the distance between the control body (20) and the actuator (30).

5. The control unit (100) according to any one of claims 1 to 4, **characterised in that** the first adjustment unit (40) comprises a first carrier (42) by means of which the control body (20) is supportable and variably positionable in a first chamber (5), and/or the second adjustment unit (50) comprises a second carrier (52) by means of which the actuator (30) is supportable and variably positionable in a second chamber (10).

6. The control unit (100) according to claim 5, **characterised in that** the second chamber (10) can have an ambient pressure applied to it via a first passage (12) and the actuator (30) can have a cabin pressure applied to it via a second passage (58), wherein the second carrier (52) preferably forms the second passage (58).

7. The control unit (100) according to any one of claims 1 to 6, **characterised in that** a spring unit (60) is coupled with the actuator (30) and/or with the control body (20).

8. The control unit (100) according to any one of claims 1 to 7, **characterised in that** the control body (20) comprises a valve body (26) for opening or closing a connection conduit (7) connected, in particular, with the first chamber (5).

9. The control unit (100) according to any one of claims 1 to 8, **characterised by** a housing (1), wherein the first adjustment unit (40) and the second adjustment unit (50) are formed and arranged to be accessible from a housing side (2).

10. The control unit (100) according to any one of claims 1 to 9, **characterised in that**, to compensate temperature influences, the dimensions and material characteristics of the individual components of the control unit (100), in particular of the control body (20), the valve rod (22), the actuator (30, 32, 34), the adjustment units (40, 50), the carriers (42, 52), the spring unit (60) and/or the housing (1) are tuned to each other intentionally in advance.

11. The control unit (100) according to claim 10, **characterised in that** the first housing section (3), the second housing section (4), the control body (20), the actuator (30), in particular the pressure capsule (34), at least one of the adjustment units (40, 50), at least one of the carriers (42, 52) and/or the spring unit (60) comprise at least one coefficient of linear expansion as a material characteristic, wherein the coefficients of linear expansion of at least two of the above-mentioned components are tuned to each other intentionally for the compensation of temperature influences,
and/or **in that** the first housing section (3), the second housing section (4), the control body (20), the actuator (30), in particular the pressure capsule (34), at least one of the adjustment units (40, 50), at least one of the carriers (42, 52) and/or the spring unit (60) have a modulus of elasticity as a material characteristic, wherein the moduli of elasticity of at least two of the above-mentioned components are tuned to each other intentionally for the compensation of temperature influences.

12. The control unit (100) according to any one of claims 1 to 11, **characterised in that** the actuator (30) has an operating range and a characteristic, and an essentially constant temperature compensation is adjustable within the operating range,
wherein the actuator (30) preferably comprises a pressure capsule (34) having an operating range from about 300 mbar to about 900 mbar, in particular from about 500 mbar to about 700 mbar, and the characteristic of the pressure capsule (34) is such that an essentially constant temperature compensation is adjustable within the operating range.

13. The control unit (100) according to any one of claims 1 to 12, **characterised in that** the control body (20) and the actuator (30) are at a predetermined distance (C) from each other in a first position and are in contact with each other in a second position to actuate the control body (20).

14. The control unit (100) according to any one of claims 1 to 13, **characterised in that** the control body (20) and the actuator (30) are lastingly, preferably permanently, in contact with each other during the intended use of the control unit (100),
and/or **in that** the control body (20) is lastingly, preferably permanently, held in the second position by the force exerted by the spring unit (60).

15. The control unit (100) according to any one of claims 1 to 14, **characterised in that** the actuator (30) is provided with an actuating unit, in particular a sensing plate (35), which can be brought into contact with the control body (20).

## Revendications

1. Unité de commande (100) pour l'actionnement d'une vanne de réglage de pression, en particulier pour l'actionnement d'une vanne de surpression d'une cabine d'avion, comprenant un corps de positionnement (20) et un actionneur (30) commandé par pression pour l'actionnement du corps de positionnement (20) en fonction d'une valeur de pression limite prédéterminée, ladite valeur de pression limite étant réglable au moyen d'un système de réglage,
**caractérisée en ce que** le système de réglage comprend une première unité de réglage (40) et une seconde unité de réglage (50), le corps de positionnement (20) étant réglable au moyen de la première unité de réglage (40) et l'actionneur (30) étant réglable au moyen de la seconde unité de réglage (50).

2. Unité de commande (100) selon la revendication 1,
**caractérisée en ce que** la seconde unité de réglage (50) est disposée pour le réglage grossier de la valeur de pression limite et la première unité de réglage (40) est disposée pour le réglage fin de la valeur de pression limite.

3. Unité de commande (100) selon l'une des revendications 1 ou 2,
**caractérisée en ce que** l'actionneur (30) comprend un corps de membrane (32, 34) déformable en fonction de la pression, et dans laquelle le corps de membrane comprend de préférence un soufflet (32) ou une capsule à pression (34), en particulier en métal.

4. Unité de commande (100) selon l'une des revendications 1 à 3, **caractérisée en ce que** la première unité de réglage (40) ou la seconde unité de réglage (50) comprend un élément de positionnement (42, 52) susceptible d'être ajusté de façon variable, en particulier un élément à pas de vis rotatif, afin de modifier la distance entre le corps de positionnement (20) et l'actionneur (30).

5. Unité de commande (100) selon l'une des revendications 1 à 4, **caractérisée en ce que** la première unité de réglage (40) comprend un premier support (42), au moyen duquel le corps de positionnement (20) est maintenu dans une première chambre (5) et peut être positionné de façon variable, et/ou **en ce que** la seconde unité de réglage (50) comprend un second support (52), au moyen duquel l'actionneur (30) est maintenu dans une seconde chambre (10) et peut être positionné de façon variable.

6. Unité de commande (100) selon la revendication 5, **caractérisée en ce que** la seconde chambre (10) peut être alimentée via un premier canal (12) avec une pression environnante, et l'actionneur (30) peut être alimenté via un second canal (58) avec une pression régnant dans la cabine, le second support (52) formant de préférence le second canal (58).

7. Unité de commande (100) selon l'une des revendications 1 à 6, **caractérisée en ce qu'**une unité à ressort (60) est couplée avec l'actionneur (30) et/ou avec le corps de positionnement (20).

8. Unité de commande (100) selon l'une des revendications 1 à 7, **caractérisée en ce que** le corps de positionnement (20) comprend un corps de vanne (26) pour libérer ou pour bloquer une conduite de raccordement (7) qui est reliée en particulier à la première chambre (5).

9. Unité de commande (100) selon l'une des revendications 1 à 8, **caractérisée par** un boîtier (1), dans laquelle la première unité de réglage (40) et la seconde unité de réglage (50) sont réalisés et agencés de manière à être accessible depuis un côté du boîtier (2).

10. Unité de commande (100) selon l'une des revendications 1 à 9, **caractérisée en ce que** les dimensions et les valeurs caractéristiques des matériaux des composants individuels de l'unité de commande (100), en particulier du corps de positionnement (20), du poussoir de valve (22), de l'actionneur (30, 32, 34), des unités de réglage (40, 50), des supports (42, 52), de l'unité à ressort (60) et/ou du boîtier (1) sont accordées les unes aux autres au préalable de façon ciblée pour la compensation des influences de température.

11. Unité de commande (100) selon la revendication 10, **caractérisée en ce que** le premier tronçon de boîtier (3), le second tronçon de boîtier (4), le corps de positionnement (20), l'actionneur (30), en particulier la capsule de pression (34), l'une au moins des unités de réglage (40, 50), l'un au moins des supports (42, 52) et/ou l'unité à ressort (60) comprennent au moins un coefficient de dilatation en longueur à titre de valeur caractéristique de leur matériau, les coefficients d'allongement en longueur d'au moins deux des composants précités étant accordés l'un avec l'autre de façon ciblée pour la compensation des influences de température,
et/ou **en ce que** le premier tronçon de boîtier (3), le second tronçon de boîtier (4), le corps de positionnement (20), l'actionneur (30), en particulier la capsule de pression (34), l'une au moins des unités de réglage (40, 50), l'un au moins des supports (42, 52) et/ou l'unité à ressort (60) comprennent au moins un module d'élasticité à titre de valeur caractéristique de leur matériau, les modules d'élasticité d'au moins deux des composants précités étant accordés l'un avec l'autre de façon ciblée pour la compensation des influences de température.

12. Unité de commande (100) selon l'une des revendications 1 à 11, **caractérisée en ce que** l'actionneur (30) comprend un domaine de fontionnement et une courbe caractéristique, et une compensation en température essentiellement constante peut être réglée à l'intérieur du domaine de fonctionnement,
l'actionneur (30) comprenant de préférence une capsule de pression (34) qui présente un domaine de fonctionnement d'environ 300 mbar à environ 900 mbar, en particulier d'environ 500 mbar à environ 700 mbar, et la courbe caractéristique de la capsule de pression (34) est conçue de telle façon qu'une compensation de température essentiellement constante peut être réglée à l'intérieur du domaine de fonctionnement.

13. Unité de commande (100) selon l'une des revendications 1 à 12, **caractérisée en ce que** le corps de positionnement (20) et l'actionneur (30) sont écartés l'un de l'autre à une distance prédéterminée (C) dans une première position et sont en contact dans une seconde position pour l'actionnement du corps de positionnement (20).

14. Unité de commande (100) selon l'une des revendications 1 à 13, **caractérisée en ce que** le corps de positionnement (20) et l'actionneur (30) sont en contact de façon durable, et de préférence de façon permanente, pendant l'utilisation de l'unité de commande (100) conforme selon sa destination,
et/ou **en ce que** le corps de positionnement (20) est maintenu de façon durable, de préférence de façon permanente, dans la seconde position par la force exercée par l'unité à ressort (60).

15. Unité de commande (100) selon l'une des revendications 1 à 14, **caractérisée en ce que** l'actionneur (30) est pourvu d'une unité d'actionnement, en particulier d'une plaque de palpage (35) qui peut être amenée en contact avec le corps de positionnement (20).
